# EUROPÄISCHE PATENTSCHRIFT

(11) **EP 0 846 596 B1**
(45) Veröffentlichungstag und Bekanntmachung des Hinweises auf die Patenterteilung: **14.02.2007**
(21) Anmeldenummer: 97120876.4
(22) Anmeldetag: 27.11.1997
(51) Int. Cl.: B60R 1/06

(54) **Aussenspiegelgelenk**
Exterior mirror joint.
Articulation pour rétroviseur.

(30) Priorität: 05.12.1996 DE 29621153 U
(43) Veröffentlichungstag der Anmeldung: 10.06.1998
(73) Patentinhaber: Donnelly Hohe GmbH & Co. KG, 97903 Collenberg (DE)
(72) Erfinder: Wagenblast, Joachim, Dr., 40470 Düsseldorf (DE)
(74) Vertreter: Zinngrebe, Horst

(56) Entgegenhaltungen:
- EP-A- 0 748 719
- DE-U- 29 606 416
- FR-A- 2 569 638
- US-A- 4 728 181
- US-A- 5 210 651
- PATENT ABSTRACTS OF JAPAN vol. 009, no. 303 (M-434), 30. November 1985 (1985-11-30) & JP 60 139548 A (KOITO SEISAKUSHO KK), 24. Juli 1985 (1985-07-24)
- PATENT ABSTRACTS OF JAPAN vol. 012, no. 039 (M-665), 5. Februar 1988 (1988-02-05) & JP 62 191249 A (MURAKAMI KAIMEIDOU:KK), 21. August 1987 (1987-08-21)

## Beschreibung

Die Erfindung betrifft einen Außenspiegel für ein Fahrzeug mit einem Spiegelfuß und einem am Spiegelfuß um eine Schwenkachse schwenkbar befestigten Spiegelträger, wobei ein Arm des Spiegelträgers mit einem Lagerteil des Spiegelfußes bleibend und reibschlüssig verbunden ist und die Schwenkachse durch die Mittelachse eines den Arm durchdringenden Gelenkbolzens definiert ist, wie in Patent Abstracts of Japan, Vol. 009, No. 303 (M-434), 30. November 1985 und JP-A-60139548 beschrieben ist.

In dem Dokument EP-A 0166378 ist ein rohrförmiger Gelenkbolzen am Spieglfuß verschraubt und der Spiegelträger weist ein Rohrstück auf, welches mittels einer Druckfeder auf den Gelenkbolzen drehbar gehalten ist. In dem Dokument DE-A-40 23 375 ist beschrieben, dass Spiegelfuß und Spiegelträger durch eine sich an einem Gelenkbolzen abstützende Druckfeder in axialer Anlage aneinander gehalten werden.

Demgegenüber liegt der Erfindung die Aufgabe zugrunde, den Montageaufwand für einen derartigen Außenspiegel herabzusetzen. Diese Aufgabe wird durch die Aussenspiegel mit den Merkmalen der Ansprüche 1 oder 4 gelöst. Damit wird der Zusammenbau des erfindungsgemäßen Außenspiegels wesentlich vereinfacht, weil er sich auf das Verrasten von Lagerteil und Arm beschränkt. Die Erfindung ermöglicht, das Spiegelfuß und Spiegelträger ganz aus Kunststoff hergestellt werden können, jedenfalls soweit es das Gelenk betrifft. Weiter, wird die Befestigung des Spiegelträgers am Spiegelfuß verbessert.

Eine Verschwenkung des Lagerteils relativ zum Spiegelfuß, die um die Schwenkachse durch Überwinden des Reibschlusses möglich ist wird um ein Verdrehen um eine zur Schwenkachse senkrechte Achse in bevorzugter Ausgestaltung der Erfindung dadurch erreicht, daß am Lagerteil ein Ritzel ausgebildet ist, dessen Zahnkranz in einer zur Schwenkachse parallelen Ebene liegt.

Die vorzugsweise heizbare Spiegelfläche kann zweckmäßig am Spiegelträger selbst ausgebildet sein.

Als Schwenkwegbegrenzung besteht die Möglichkeit, am Lagerteil oder an dem Arm eine radial vorspringende Nase auszubilden, die in einer am Arm oder Lagerteil vorgesehenen Nut beweglich ist.

Zusätzlich zu der Handverstellung des Spiegelträgers relativ zum Spiegelfuß um die Schwenkachse wird ein motorisches Beiklappen des Spiegelträgers in zweckmäßiger Weiterführung der Erfindung dadurch besonders einfach, daß der Arm oder die Arme als Buchse (n) ausgeführt sind, in welche sich ein Gelenkbolzen erstreckt, dessen Mittellinie in der Schwenkachse liegt, wobei der Gelenkbolzen an dem Arm oder den Armen zweckmäßig verrastet ist. Am Umfang des Gelenkbolzens kann dann ein Zahnkranz vorgesehen sein, der mit einer motorge triebenen Zahnstange oder einem motorgetriebenen Getrieberad kämmt. Damit wird der Beiklappantrieb unmittelbar in das Gelenk verlegt. Zweckmäßig ist der Gelenkbolzen mit dem Arm oder den Armen durch Rastmittel gekoppelt, deren Eingriff durch Schlag auf den Spiegelträger lösbar ist. Damit bleibt bei Schlag auf den Spiegelträger der Beiklappantrieb unbeschädigt.

Weitere bevorzugte Ausführungsformen der Erfindung sind in den Unteransprüchen angegeben.

Die Erfindung wird nachstehend anhand der in der beigefügten Zeichnung dargestellten Ausführungsbeispiele im einzelnen beschrieben. Es zeigen:
- Fig. 1: einen Axialschnitt durch eine erste Ausführungsform eines Gelenks zwischen Spiegelträger und Spiegelfuß eines Außenspiegels;
- Fig. 2: eine schematische Draufsicht auf das Gelenk nach Fig. 1;
- Fig. 3: einen schematischen Axialschnitt durch eine zweite Ausführungsform des Gelenks;
- Fig. 4: eine schematische Draufsicht auf das Gelenk nach Fig. 3;
- Fig. 5: eine perspektivische Ansicht eines Spiegelfußes nach einer weiteren Ausführungsform der Erfindung;
- Fig. 6: eine perspektivische schematische Ansicht eines spiegelfußnahen Teils eines Spiegelträgers für den Spiegelfuß nach Fig. 5;
- Fig. 7: eine perspektivische Darstellung eines Gelenkbolzens für das Gelenk gemäß Fig. 5 und 6;
- Fig. 8: eine perspektivische Ansicht eines Außenspiegels gemäß dem in Fig. 5, 6 und 7 dargestellten Ausführungsbeispiel;
- Fig. 9: eine schematische Darstellung einer vereinfachten Ausführungsform eines Spiegelträgers für das Gelenk nach Fig. 5 - 8; und
- Fig. 10: eine Draufsicht auf die Ausführungsform eines Spiegelträgers gemäß Fig. 9.

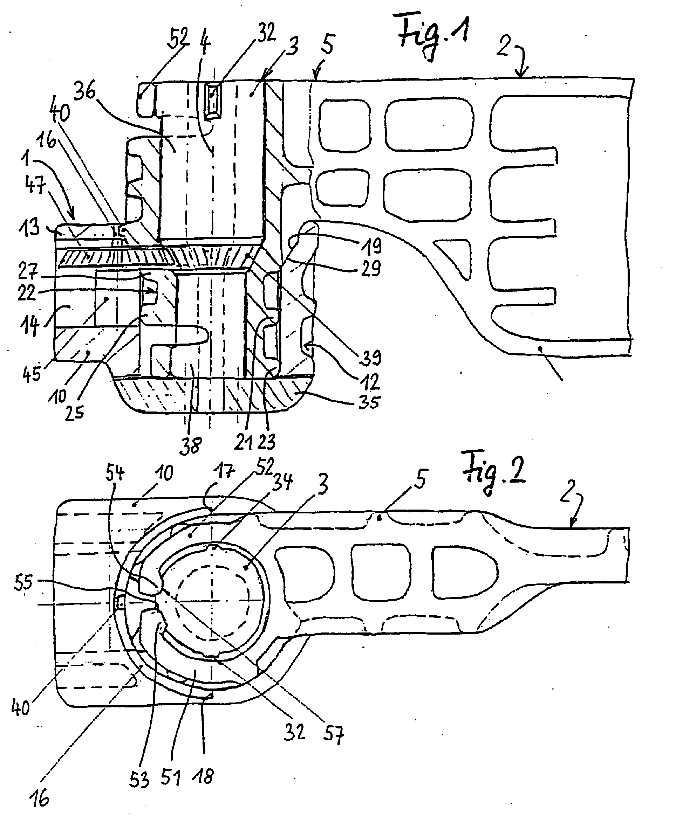

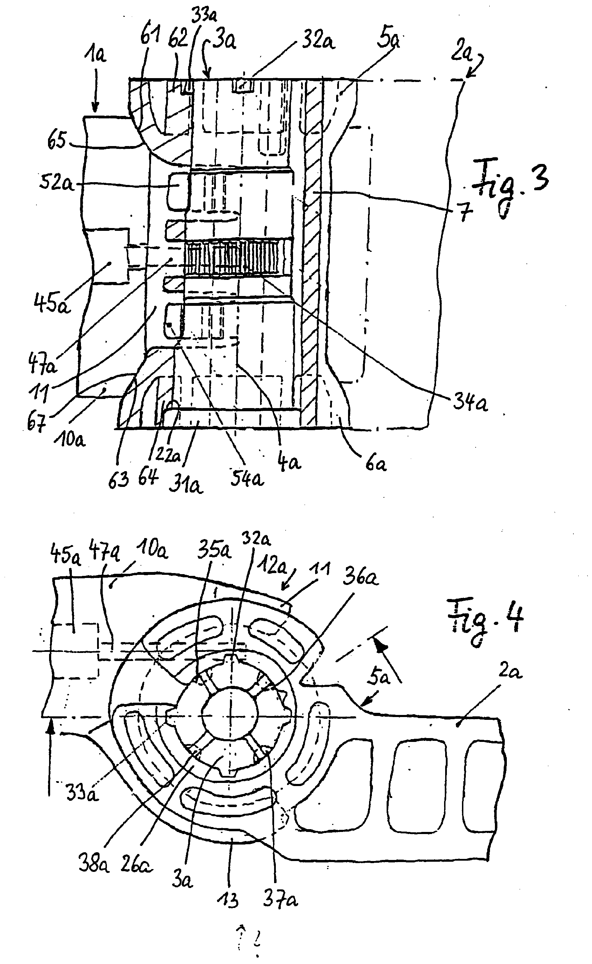

Bei dem in Figuren 1 und 2 dargestellten Ausführungsbeispiel der Erfindung ist von dem im Ganzen mit 1 bezeichneten Spiegelfuß nur derjenige Teil dargestellt, in welchem ein Arm 5 eines Spiegelträgers 2 und ein Gelenkbolzen 3 für die Schwenkbarkeit des Spiegelträgers um eine Schwenkachse 4 befestigt ist.

Dazu weist der Spiegelfuß 1 ein Lagerteil 10 mit einer im wesentlichen zylindrischen Hülse 12 auf, deren Mittellinie mit der Schwenkachse 4 zusammenfällt. In die Hülse 12 mündet quer zur Schwenkachse 4 ein Kanal 14, der sich zu einem hier nicht dargestellten Befestigungsteil des Spiegelfußes 1 für dessen Festlegung an der Fahrzeugkarosserie erstreckt. Ein im wesentlichen zylindrisches Fußteil 22 eines an den Spiegelträger 2 angeformten Armes 5 ist von oben in die Hülse 12 einge-setzt. Aus dem Fußteil 22 stehen mehrere axial beabstandete Vorsprünge 21, 23, 25, 27 radial vor, welche nach Einsetzen des Fußteils 22 in die Hülse 12 zur Anlage an die Innenwand der Hülse 12 gelangen und somit sicherstellen, daß der Spiegelträger 2 in der Hülse 12 um die Achse 4 drehbar ist.

Zur Sicherung des Fußteils 22 in der Hülse 12 können am unteren Ende des Fußteils etwa neben dem Vorsprung 23 radialelastische Rasthaken (nicht dargestellt) vorgesehen sein, die mit in der Wand der Hülse 12 ausgebildeten Gegenrasten im Sinne einer bleibenden Verrastung des Fußteils mit der Hülse 12 zusammenwirken, jedoch ein Verschwenken des Spiegelträgers 2 um die Schwenkachse 4 zulassen.
Alternativ ist am unteren Ende des Fußteils 22 eine Kappe 35 mit diesem verschraubt, welche das Fußteil 22 sowie die Wand der Hülse 12 unterfaßt.

Nach dem Verrasten oder Verschrauben des Fußteils 22 in der Hülse 12 liegt eine am Fußteil 22 ausgebildete nach radial außen konische, ringförmige Lagerfläche 29 im Reibschluß auf einer am oberen Ende der Hülse 12 vorhandenen entsprechend konischen Gegenlagerfläche 19 auf. Damit ist der Spiegelträger 2 relativ zum Spiegelfuß 1 um die Achse 4 schwenkbar.

Zur Schwenkwegbegrenzung für den Spiegelträger 2 steht aus dem Fußteil 22 im Bereich des oberen Teils der den Kanal 14 umgebenden Wand 13 eine Nase 40 radial vor, die in einer Umfangsnut 16, die am hülsenseitigen Ende der Wand 13 ausgebildet ist, zwischen zwei die Nut 16 begrenzenden Anschlägen 17, 18 beweglich ist. Die Anschläge 17, 18 dienen somit als Schwenkwegbegrenzer für den Spiegelträger 2. Der Reibschluß zwischen den Flächen 29 und 19 ist dabei so gewählt, daß der Spiegelträger 2 im Normalbetrieb des mit dem erfindungsgemäßen Außenspiegel ausgerüsteten Fahrzeugs die einmal eingestellte Winkelposition beibehält, der Reibschluß jedoch von Hand überwindbar ist.

Für das motorische Beiklappen des Spiegelträgers 2 ist ein Beiklappantrieb in das Gelenk integriert. Dazu weist der Arm 5 eine Durchgangsöffnung auf, deren Mittellinie in der Schwenkachse 4 liegt und in die ein Gelenkbolzen 3 eingesetzt ist.

Der im wesentlichen zylindrische Gelenkbolzen 3 besitzt einen oberen Abschnitt 36 mit einem im Verhältnis zu seinem unteren Abschnitt 38 größeren Durchmesser. Die Abschnitte 36 und 38 des Gelenkbolzens gehen über einen Konus 39 ineinander über, so daß sich der Gelenkbolzen 3 von oben in die Durchgangsöffnung des Armes 5 einsetzen läßt, wobei der Gelenkbolzen 3 dann mit der Oberkante des Spiegelträgers 2 sowie mit der Unterkante der Hülse 12 bündig abschließt. Der Gelenkbolzen 3 wird in der Durchgangsöffnung des Armes 5 durch Verschrauben (die Schraube ist nicht dargestellt) mit einem Deckel 35 gehalten, welcher die Unterseite der Hülse 12 unterfaßt. Der Spiegelträger 2 ist somit relativ zum Gelenkbolzen 3 um die Schwenkachse 4 verdrehbar.

In dem Kanal 14 ist ein Elektromotor 45 mit Untersetzungsgebtriebe untergebracht, auf dessen zur Schwenkachse 4 parallelen Abtriebswelle ein Kegelrad 47 aufgekeilt ist. Der Motor 45 mit Kegelrad 47 ist in dem Kanal 14 so angeordnet, daß das Kegelrad 47 mit in dem Konus 39 ausgebildeten Zähnen des Gelenkbolzens 3 kämmt. Um die motorische Verdrehung des Gelenkbolzens 3 auf den Spiegelträger 2 übertragen zu können, ist letzterer mit ersterem lösbar gekoppelt. Dazu umgreift der oberste Abschnitt des Armes 5 den oberen Rand des Gelenkbolzens 3 mit zwei umfangmäßig beabstandeten radialelastischen Rastfingern 51, 52, deren sich radial einwärts erstreckende Rastnasen 53, 54 in entsprechende Ausnehmungen 55, 57 am Umfang des Gelenkbolzens 3 rastend eingreifen. Der Eingriff der Rastnasen 53, 54 in die Sacklöcher 55, 57 ermöglicht die Übertragung einer Drehbewegung des Gelenkbolzens 3 auf den Spiegelträger 2.

Wie ersichtlich kann der Spiegelträger 2 sich etwa bei Schlag auf diesen in Schwenkrichtung aus der Kopplung mit dem Gelenkbolzen 3 befreien, indem die Rastnasen 53, 54 sich aus den zugehörigen Rastvertiefungen 55, 57 herausbewegen, wenn der Gelenkbolzen 3 über seine Ankopplung an das nicht drehende Kegelrad 47 feststeht. Das hiernach freie Schwingen des Spiegelträgers findet seine winkelmäßige Begrenzung durch Anlaufen der Rastnasen 54 gegen einen radialen Vorsprung 34 am Gelenkbolzen bzw. durch Anlaufen der Rastnase 53 gegen den radialen Vorsprung 32 am Gelenkbolzen 3.

Man erkennt, daß der motorische Antrieb des Spiegelträgers 2 bei diesem Ausführungsbeispiel der Erfindung in das Gelenk verlegt ist.

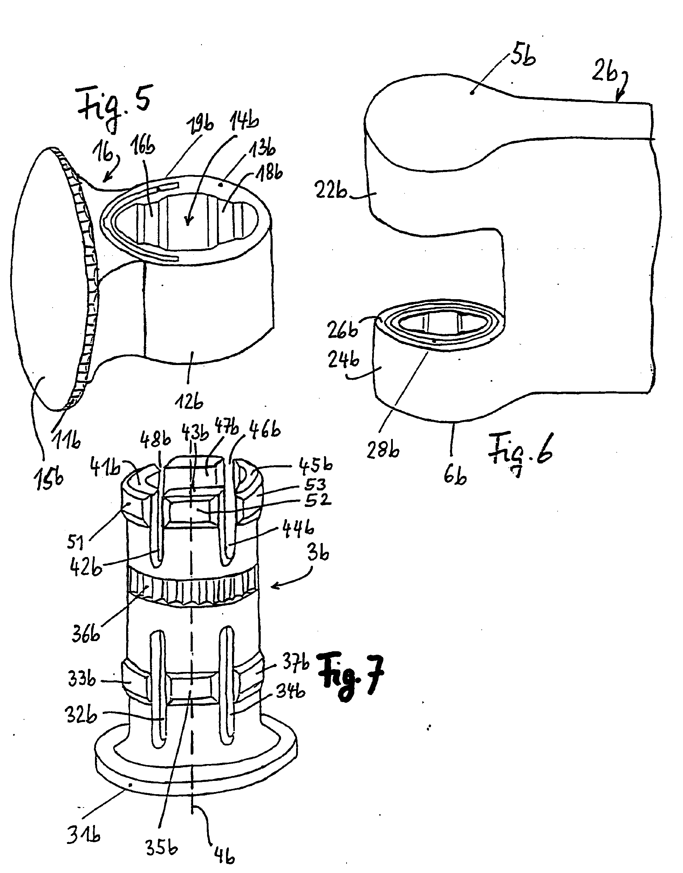

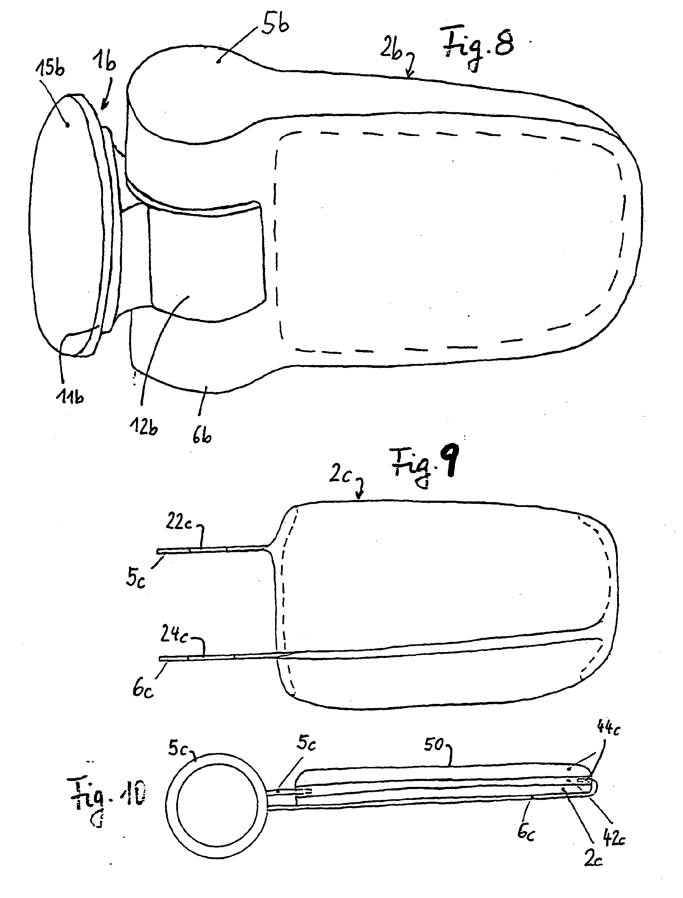

Bei dem in den Figuren 3 und 4 dargestellten Ausführungsbeispiel der Erfindung weist der Spiegelfuß 1a ein zum Spiegelträger 2a geöffnetes Lagerteil 10a auf, welches zur Aufnahme zweier über ein Zwischenstück 7 verbundener Arme 5a, 6a des Spiegelträgers 2a eine Hülse 12a mit halbzylindrischer Begrenzung besitzt. Dadurch entstehen am Ende des Lagerteils 10a gegenüberliegende Wandabschnitte 11, 13, welche sowohl die Arme 5a, 6a mit Zwischenstück 7 wie auch einen Gelenkbolzen 3a teilweise umgeben. Der Arm 5a besitzt einen Kopf 62, der über den Umfang des Zwischenstückes 7 radial mit einer nach oben außen gebogenen Lagerfläche 61 erweitert ist. Der Arm 6a besitzt einen Fuß 64, der ähnlich wie der Kopf 62 im wesentlichen über den gesamten Umfang des Zwischenstückes 7 unter Bildung einer nach unten außen gebogenen Lagerfläche 63 radial erweitert ist. Die Lagerflächen 61 und 63 stehen in Reibschluß mit an den Wandabschnitten 11 und 13 oben und unten entsprechend ausgebildeten Gegenlagerflächen 65, 67, so daß der Spiegelträger 2a, dessen Korpus an den Kopf 62 und den Fuß 64 angeformt ist, von den Wandabschnitten 11, 13 gehalten ist und sich über den Flächeneingriff 61, 65 und 63, 67 relativ zum Lagerteil 10a um die Schwenkachse 4a verschwenken kann.

Nicht im einzelnen dargestellt ist eine Schwenkwegbegrenzung für den Spiegelträger 2a, wie sie für den Spiegelträger 2 anhand des Eingriffs der Nase 40 in die Nut 16 bei dem ersten Ausführungsbeispiel erläutert wurde.
Es versteht sich, daß eine entsprechende Nase und eine zugehörige Nut an dem Zwischenstück 7 und der Hülse 12a ausgebildet sein können.

Zum motorischen Verschwenken des Spiegelträgers 2a um die Schwenkachse 4a ist in den Armen 5a, 6a und dem Zwischenstück 7 eine abgestufte Durchgangsöffnung vorgesehen, deren Mittellinie mit der Schwenkachse 4a übereinstimmt. In die Durchgangsöffnung ist von unten ein Gelenkbolzen 3a eingeführt, der am unteren Ende einen umlaufenden, erweiterten Bund 31a und am oberen Ende radial vorstehende Rastnasen 32a, 33a aufweist. Der Bund 31a liegt gegen eine Schulter 22a an, die im Fuß 64 ausgebildet ist. Die Rastnasen 32a, 33a greifen in eine ringförmige Ausnehmung 26a am oberen Rand der Durchgangsöffnung ein.

Am Umfang des Gelenkbolzens 3a ist im Bereich des Zwischenstückes 7 ein Umfangs-Zahnsegment 34a ausgebildet, welches mit einer Zahnstange 47a kämmt.

Die Zahnstange 47a wird angetrieben von einem nicht dargestellten Abtriebsritzel eines Elektromotors 45a, der in einer seitlichen Ausnehmung des Lagerteils angeordnet ist.

Oberhalb des Zahnkranzes 34a jedoch unterhalb des Kopfes 62 ist der Gelenkbolzen 3a von einem Finger 52a des Zwischenstückes 7 umgriffen, für dessen am Ende ausgebildete radial einwärts weisende Rastnase in der gleichliegenden Mantelfläche des Gelenkbolzens 3a mehrere in Umfangsrichtung gleichbeabstandete Einsenkungen 35a, 36a, 37a, 38a ausgebildet sind.

Ein weiterer Finger 54a der aus der Wand des Zwischenstücks 7 ausgebildet ist, befindet sich unterhalb des Zahnkranzes 34a und oberhalb des Fußes 64, dessen radial einwärts weisende Rastnase in den Einsenkungen 35a, 36a, 37a, 38a entsprechende Einsenkungen am Umfang des Gelenkbolzens 3a einrasten können. Wenn die Rastnasen der Finger 52a und 54a in eine der Einsenkungen 35a, 36a, 37a, 38a eingefangen sind, ist der Spiegelträger 2a mit dem Gelenkbolzen 3a drehgekoppelt, so daß bei aktiviertem Motor 45a der Spiegelträger 2a zusammen mit dem Gelenkbolzen 3a in der einen oder anderen Richtung verschwenkt werden kann.

Wird auf dem Spiegelträger 2a ein Schlag ausgeübt, kommen die Rastnasen der Finger 52a, 54a aus der jeweiligen Einsenkung im Umfang des Gelenkbolzens 3a frei, so daß der Spiegelträger 2a dem Schlag ausweichen kann, wobei je nach Größe des Schlages die genannten Rastnasen möglicherweise die eine oder andere Einsenkung überfahren können.

Bei dem in den Figuren 5 bis 8 dargestellten weiteren Ausführungsbeispiel der Erfindung weist der Spiegelfuß 1b eine fahrzeugsseitige zur Schwenkachse 4b parallele, kreisrunde Platte 15b auf, die an ihrem Umfang gezahnt ist. Diese Umfangsverzahnung 11b ist dazu bestimmt, mit einem nicht dargestellten Abtriebsritzel eines ebenfalls nicht dargestellten Elektromotors zusammenzuwirken, um den Spiegelfuß 1b zusammen mit dem Spiegelträger 2b um eine zur Schwenkachse 4b senkrechte Achse verdrehen zu können. Dazu erstreckt sich die Platte parallel zur Schwenkachse 4b.

An die vom Fahrzeug abgewandte Seite der Platte 15b ist eine zylindrische Hülse 12b mit einer zentralen Durchgangsöffnung 14b angeformt, deren Mittellinie dazu bestimmt ist, mit der Schwenkachse 4b zusammenzufallen. Aus der Innenfläche der Durchgangsöffnung 14b stehen mehrere in Umfangsrichtung beabstandete achsparallele Rippen 16b, 18b radial einwärts vor, auf die noch eingegangen wird. In die obere Stirnfläche 13b ist ein elektrischer Kontaktstreifen 19b eingelassen, der mit einem nicht dargestellten elektrischen Leiter verbunden ist. Entsprechend weist die untere Stirnfläche der Hülse 12b ebenfalls einen in die Stirnfläche eingebetteten Kontakstreifen auf.

Der Gelenkbolzen 3b gemäß Fig. 7 ist ein zylindrischer Hohlbolzen mit unterem umlaufenden Bund 31b. In den unteren Teil der Zylinderwand des Gelenkbolzens 3b sind mehrere sich in axialer Richtung erstreckende Einschnitte 32b, 34b eingebracht, so daß die zwischen ihnen liegenden Wandabschnitte radial einfedern können. Aus den zwischen den Einschnitten 32b, 34b befindlichen Wandabschnitten des Hohlbolzens stehen zu einem Umfangskreis angeordnete Rastrippen 33b, 35b, 37b radial nach außen vor.

Im mittleren Teil des Hohlbolzens ist in dessen Außenwand eine Umfangsverzahnung 36b eingeprägt, die dazu bestimmt ist, wie bei dem im Zusammenhang mit Figuren 3 und 4 beschriebenen Ausführungsbeispiel mit einer motorbetriebenen Zahnleiste zusammenzuwirken. Die Zahnstange selbst und ihr zugehöriger Elektroantrieb sind in den Figuren 5 bis 8 nicht dargestellt.

Am oberen Ende weist die Wandung des Hohlbolzens mehere in Umfangsrichtung gleichbeabstandete, von der Stirnfläche ausgehende Einschnitte, 42b, 44b, 46b, 48b auf, von denen jeder im hier dargestellten Ausführungsbeispiel mit einem der Einschnitte 32b, 34b axial fluchtet. Dadurch sind am oberen Ende des Hohlbolzens vier radial einwärts federnde Zungen 41b, 43b, 45b, 47b ausgebildet, von denen jede an ihrem oberen Rand eine radial auswärts vorstehende in Umfangsrichtung gerichtete Rippe 51, 52, 53 trägt.

Der Spiegelträger 2b besitzt an seinem fußnahen Ende zwei axial fluchtende übereinander angeordnete Lagerbuchsen 22b, 24b an Armen 5b, 6b, die axialfluchtend aufeinander ausgerichtet sind. In die aufeinander zuweisenden Stirnflächen jeder der beiden Lagerbuchsen 22b, 24b (die Stirnfläche der Lagerbuchse 24b ist mit 26b bezeichnet) ist ein Kontaktring 28b eingelassen, der über eine nicht dargestellte elektrische Leitung mit einem im Spiegelträger 2b beherbergten Verbraucher, etwa in Form eines elektrischen Spiegelverstellmechanismus, oder einer Spiegelheizung, verbunden ist. Der vertikale Abstand der beiden Buchsen 22b und 24b ist so gewählt, daß die Hülse 12b des Spiegelfußes 1b zwischen die beiden Buchsen paßt und dort verrastet, wobei die genannten Kontaktringe aufeinander sitzen und eine leitende Verbindung bilden.

Nach dem Zwischenfügen der Hülse 12b zwischen die beiden Buchsen 22b und 24b wird der Gelenkbolzen 3b von unten durch die untere Buchse 24b, durch die Öffnung des Lagerteils 12b und in die obere Buchse 22b hochgeschoben, wobei die zwischen die Rippen 33b, 35b, 37b und 51, 52, 53 greifenden achsparallelen Leisten 16b, 18b des Spiegelfußes sowie entsprechender achsparallelen Leisten in den beiden Buchsen der Führung des Gelenkbolzens 3b dienen. Im Inneren der oberen Buchse 22b sind den Rippen 51, 52, 53 entsprechende Nuten vorgesehen, in welche die Rippen nach vollständigem Einschieben des Gelenkbolzens 3b einrasten können.

Auch bei diesem Beispiel der Erfindung ist der Spiegelträger 2b mit dem Gelenkbolzen 3b drehgekoppelt und damit motorisch sowohl um die Schwenkachse 4b wie auch um eine dazu senkrechte Achse verschenk- bzw. verdrehbar.

Schließlich zeigen die Figuren 9 und 10 einen besonders einfach ausgestalteten Spiegelträger 2c, welcher statt der Buchsen 22b, 24b zwei axial fluchtend Augen 22c, 24c an Armen 5c, 6c aufweist. Zwischen die Augen 22c, 24c kann das Lagerteil 12b des Spiegelfußes 1b zwischengeschoben werden, so daß der Gelenkbolzen 3b durch das untere Auge 24c, die Öffnung 14b und das obere Auge 22c hindurchgeschoben werden kann, wobei der Bund 31b an der Unterseite des Auges 24c anliegt und die Rippen 51, 52, 53 das obere Auge 22c radial übergreifen können.

Die aufeinander zuweisenden Stirnseiten der Augen 22c, 24c tragen wieder elektrische Kontakstreifen, die bei dem erwähnten Zusammenbau mit entsprechenden Kontaktstreifen 18b am Spiegelfuß 1b in elektrischen Kontakt treten. Als Verbraucher ist gemäß Fig. 10 hier eine Spiegelheizung für einen Spiegel 50 vorgesehen, der über die mit den Kontaktringen verbundenen in die Arme 5c, 6c integrierten elektrischen Zuleitungen 42c, 44c mit Strom versorgt wird.

Der Spiegel 50 kann Teil des Spiegelträgers 2c sein, auf den im Bereich des Spiegels 50 ein reflektierender Belag aufgebracht ist.

## Patentansprüche

1. Außenspiegel für ein Fahrzeug mit einem Spiegelfuß (1) und mit einem am Spiegelfuß um eine Schwenkachse (4) schwenkbar befestigten Spiegelträger (2), wobei Lagerflächen (19) an wenigstens einem Arm (5) des Spiegelträgers (2) mit Gegenlagerflächen (29) an einem Lagerteil (10) des Spiegelfußes (1) in überwindbaren Reibschluß gelangen, **dadurch gekennzeichnet, dass** der Arm (5) des Spiegelträgers (2) mit dem Lagerteil (10) des Spiegelfußes zur um die Schwenkachse (4) schwenkbaren Befestigung bleibend verrastbar ist, wobei der Arm mit einer Hülse (12) des Spiegelfußes, deren Achse in der Schwenkachse liegt, verrastet ist

2. Außenspiegel nach Anspruch 1, wobei die Hülse zylindrisch ist.

3. Außenspiegel nach Anspruch 2, wobei Radialelastische Rasthaken, die mit in der Wand der Hülse (12) ausgebildeten Gegenrasten im Sinne einer bleibenden Verrastung zusammenwirken, jedoch ein Verschwenken um die des Spiegelträgers um die Schwenkachse zulassen.

4. Außenspiegel für ein Fahrzeug mit einem Spiegelfuß (1a 1b) und mit einem am Spiegelfuß um eine Schwenkachse (4a, 4b) schwenkbar befestigten Spiegelträger (2a, 2b, 2c), wobei Lagerflächen (61, 63) an wenigstens einem Arm (5a, 5b, 5c) des Spiegelträgers (2a, 2b, 2c) mit Gegenlagerflächen (65, 67) an einem Lagerteil (10a, 10b) des Spiegelfußes (1a, 1b) in überwindbaren Reibschluß gelangen, **dadurch gekennzeichnet, dass** der Arm (5a ,5b ,5c) des Spiegelträgers (2a, 2b, 2c) mit dem Lagerteil (10a, 10b) des Spiegelfußes zur um die Schwenkachse (4a, 4b) schwenkbaren Befestigtung bleibend verrastbar ist, wobei eine Hülse (12b) des Spiegelfußes (1b) oben und unten von je einem Arm (5b, 6b) des Spiegelträgers (2b) über- bzw. untergriffen ist und ein Gelenkbolzen (3b) eine in einem der Arme (6b) vorgesehene Öffnung sowie die Hülse (12b) durchdringt und im anderen Arm (5b) verrastet ist.

5. Außenspiegel nach Anspruch 4, wobei die Hülse (12) eine halbzylindrische Begrenzung besitzt und den quer zur Schwenkachse (4a) in die Hülse eingesetzten Arm hält, wobei der Arm eine obere (61) und eine untere (63) Lagerfläche aufweist, wobei sich beide Lagerflächen nach radial außen erstrecken und mit an der Hülse (12a) des Spiegelfußes ausgebildeten oberen Gegenlagerfläche (65) und unteren Gegenlagerfläche (67) bei quer zur Schwenkachse (4a) in überwindbaren Reibschluss gelangen.

6. Außenspiegel nach Anspruch 4, wobei die zylindrische Hülse (12b) des Spiegelfußes (1b) zwischen zwei axial fluchtende Lagerbuchsen (22b, 24b) an Armen passt und verrastet.

7. Außenspiegel nach einem der vorstehenden Ansprüche, wobei die Schwenkachse durch die Mittelachse eines den Arm durchdringenden Gelenkbolzens (3, 3a, 3b) definiert ist.

8. Außenspiegel nach Anspruch 5, **dadurch gekennzeichnet, dass** die in Umfangsrichtung halb offene Hülse (12a) den Arm wenigstens teilweise umgibt.

9. Außenspiegel nach einem oder mehreren der Ansprüche 4 bis 8, **dadurch gekennzeichnet, dass** der Gelenkbolzen in dem Arm axial verrastet ist.

10. Außenspiegel nach einem der vorstehenden Ansprüche, **dadurch gekennzeichnet, dass** zur Verdrehung des Spiegelträgers um eine zur Schwenkachse senkrechte Achse am Lagerteil ein Ritzel (15b) ausgebildet ist, dessen Zahnkranz (11b) in einer zur Schwenkachse (4a) parallelen Ebene liegt.

11. Außenspiegel nach einem der vorstehenden Ansprüche, **dadurch gekennzeichnet, dass** der Spiegelträger eine vorzugsweise heizbare Spiegelfläche (40c) aufweist.

12. Außenspiegel nach einem der vorstehenden Ansprüche, **dadurch gekennzeichnet, dass** als Schwenkwegbegrenzung am Lagerteil oder dem Arm eine radial vorspringende Nase (40) ausgebildet ist, die in einer am Arm oder am Lagerteil vorgesehenen, begrenzten (17, 18) Nut (16) beweglich ist.

13. Außenspiegel nach einem der Ansprüche 5 oder 8, **dadurch gekennzeichnet, dass** die Lagerflächen (61, 63) an den Enden eines Zwischenstückes (7) des Spiegelträgers ausgebildet sind, das sich durch eine in Umfangsrichtung halb offene Hülse des Lagerteils (10a) erstreckt.

14. Außenspiegel nach einem der vorstehenden Ansprüche, **dadurch gekennzeichnet, dass** der Arm oder die Arme als Buchse(n) ausgeführt sind, in welcher der Gelenkbolzen (3, 3a, 3b) verrastbar ist.

15. Außenspiegel nach einem der vorstehenden Ansprüche, **dadurch gekennzeichnet, dass** an dem Arm oder den Armen und dem Gelenkbolzen Rastmittel (51, 52, 53, 54, 52a, 54a) vorgesehen sind, deren Eingriff durch Schlag auf den Spiegelträger lösbar ist.

16. Außenspiegel nach Anspruch 15, **dadurch gekennzeichnet, dass** die Rastmittel am Zwischenstück (7) vorgesehen sind.

17. Außenspiegel nach einem der Ansprüche 10 bis 16, **dadurch gekennzeichnet, dass** am Umfang des Gelenkbolzens ein Zahnkranz (39, 34a, 36b) vorgesehen ist, der mit einer motorgetriebenen Zahnstange (47a) oder einem motorgetriebenen Getrieberad (47) kämmt.

18. Außenspiegel nach einem der vorstehenden Ansprüche, **dadurch gekennzeichnet, dass** die Hülse, der Spiegelträger und der Gelenkbolzen aus Kunststoff bestehen.

## Claims

1. Exterior mirror for a vehicle, having a mirror foot (1) and a mirror support (2) attached pivotable on the mirror foot about a pivot axis (4), whereby bearing surfaces (19) on at least one arm (5) of the mirror support (2) come into breakable frictional contact with counter-bearing surfaces (29) on a bearing member (10) of the mirror foot (1), **characterised in that** the arm (5) of the mirror support (2) is permanently lockable against the bearing member (10) of the mirror foot for pivotable fixing about the pivot axis (4), whereby the arm is locked against a sleeve (12) of the mirror foot whose axis lies in the pivot axis.

2. Exterior mirror according to claim 1, whereby the sleeve is cylindrical.

3. Exterior mirror according to claim 2, whereby radially elastic latching hooks interact with counterlatches formed in the wall of the sleeve (12) providing permanent locking, but permitting pivoting about that of the mirror support about the pivot axis.

4. Exterior mirror for a vehicle, having a mirror foot (1a, 1b) and a mirror support (2a, 2b, 2c) attached pivotable on the mirror foot about a pivot axis (4a, 4b), whereby bearing surfaces (61, 63) on at least one arm (5a, 5b, 5c) of the mirror support (2a, 2b, 2c) come into breakable frictional contact with counter-bearing surfaces (65, 67) on a bearing member (10a, 10b) of the mirror foot (1a, 1b), **characterised in that** the arm (5a, 5b, 5c) of the mirror support (2a, 2b, 2c) is permanently lockable against the bearing member (10a, 10b) of the mirror foot for pivotable fixing about the pivot axis (4a, 4b), whereby a sleeve (12b) of the mirror foot (1b) is grasped above and below by, respectively, one arm (5b, 6b) of the mirror support (2b) and a pivot bolt (3b) penetrates into an opening provided in one of the arms (6b) and the sleeve (12b) and is locked in the other arm (5b).

5. Exterior mirror according to claim 4, whereby the sleeve (12) has a semicylindrical delimitation and holds the arm inserted into the sleeve transversely to the pivot axis (4a), whereby the arm has an upper (61) and a lower (63) bearing surface, whereby both bearing surfaces extend radially outwardly and come into breakable frictional contact transversely to the pivot axis (4a) with an upper counterbearing surface (65) and a lower counterbearing surface (67) formed on the sleeve (12a) of the mirror foot.

6. Exterior mirror according to claim 4, whereby the cylindrical sleeve (12b) of the mirror foot (1b) fits and locks between two axially aligned bearing sleeves (22b, 24b) on arms.

7. Exterior mirror according to one of the previous claims, whereby the pivot axis is defined by the central axis of a pivot bolt (3, 3a, 3b) penetrating the arm.

8. Exterior mirror according to claim 5, **characterised in that** the sleeve (12a) half open in the peripheral direction at least partially surrounds the arm.

9. Exterior mirror according to one or more of the claims 4 to 8, **characterised in that** the pivot bolt is axially locked in the arm.

10. Exterior mirror according to one of the previous claims, **characterised in that** in order to twist the mirror support about an axis perpendicular to the pivot axis, on the bearing member a pinion (15b) is formed whose toothed wheel (11b) lies in a plane parallel to the pivot axis (4a).

11. Exterior mirror according to one of the previous claims, **characterised in that** the mirror support has a preferably heatable mirror surface (40c).

12. Exterior mirror according to one of the previous claims, **characterised in that**, as pivot limitation, on the bearing member or the arm, a radially projecting lug (40) is formed, which is movable in a delimited (17, 18) groove (16) on the arm or on the bearing member.

13. Exterior mirror according to one of the claims 5 or 8, **characterised in that** the bearing surfaces (61, 63) are formed on the ends of an intermediate member (7) of the mirror support which extends through a sleeve of the bearing member (10a) that is half open in the peripheral direction.

14. Exterior mirror according to one of the previous claims, **characterised in that** the arm or arms are designed as a sleeve or sleeves in which the pivot bolt (3, 3a, 3b) is lockable.

15. Exterior mirror according to one of the previous claims, **characterised in that** on the arm or arms and the pivot bolts, locking means (51, 52, 53, 54, 52a, 54a) are provided whose engagement is breakable by a blow to the mirror support.

16. Exterior mirror according to claim 15, **characterised in that** the locking means are provided on the intermediate member (7).

17. Exterior mirror according to one of the claims 10 to 16, **characterised in that** on the periphery of the pivot bolt a toothed wheel (39, 34a, 36b) is provided, which meshes with a motor-driven toothed rack (47a) or a motor-driven gear wheel (47).

18. Exterior mirror according to one of the previous claims, **characterised in that** the sleeve, the mirror support and the pivot bolt are made of plastics.

## Revendications

1. Rétroviseur extérieur pour un véhicule, comprenant une embase (1) et un support (2) fixé sur ladite embase avec faculté de pivotement autour d'un axe de pivotement (4), des surfaces de montage (19), situées sur au moins un bras (5) du support (2) du rétroviseur, étant alors assemblées, par frottement neutralisable, avec des surfaces de montage complémentaires (29) situées sur une pièce de montage (10) de l'embase (1) du rétroviseur, **caractérisé par le fait que** le bras (5) du support (2) du rétroviseur peut être durablement encliqueté sur la pièce de montage (10) de l'embase du rétroviseur, en vue de la fixation pivotante autour de l'axe de pivotement (4), ledit bras étant solidarisé par déclic avec une douille (12) de l'embase du rétroviseur, dont l'axe se trouve dans l'axe de pivotement.

2. Rétroviseur extérieur selon la revendication 1, la douille étant cylindrique.

3. Rétroviseur extérieur selon la revendication 2, des crochets encliquetables à élasticité radiale coopérant avec des crans complémentaires façonnés dans la paroi de la douille (12), dans le sens d'un encliquetage durable, tout en autorisant cependant un pivotement du support du rétroviseur autour de l'axe de pivotement.

4. Rétroviseur extérieur pour un véhicule, comprenant une embase (1a, 1b) et un support (2a, 2b, 2c) fixé sur ladite embase avec faculté de pivotement autour d'un axe de pivotement (4a, 4b), des surfaces de montage (61, 63), situées sur au moins un bras (5a, 5b, 5c) du support (2a, 2b, 2c) du rétroviseur, étant alors assemblées, par frottement neutralisable, avec des surfaces de montage complémentaires (65, 67) situées sur une pièce de montage (10a, 10b) de l'embase (1a, 1b) du rétroviseur, **caractérisé par le fait que** le bras (5a, 5b, 5c) du support (2a, 2b, 2c) du rétroviseur peut être durablement encliqueté sur la pièce de montage (10a, 10b) de l'embase du rétroviseur, en vue de la fixation pivotante autour de l'axe de pivotement (4a, 4b), une douille (12b) de l'embase (1b) étant respectivement coiffée ou emprisonnée par-dessous, en partie haute et en partie basse, par un bras respectif (5b, 6b) du support (2b), et une cheville d'articulation (3b) traversant un orifice prévu dans l'un (6b) des bras, ainsi que la douille (12b), et étant encliquetée dans l'autre bras (5b).

5. Rétroviseur extérieur selon la revendication 4, la douille (12) possédant une délimitation semi-cylindrique et retenant le bras inséré dans ladite douille, transversalement par rapport à l'axe de pivotement (4a), ledit bras comprenant une surface de montage supérieure (61) et une surface de montage inférieure (63), les deux surfaces de montage s'étendant radialement vers l'extérieur et étant assemblées par frottement neutralisable, transversalement par rapport à l'axe de pivotement (4a), avec des surfaces de montage complémentaires supérieures (65) et avec des surfaces de montage complémentaires inférieures (67), façonnées sur la douille (12a) de l'embase du rétroviseur.

6. Rétroviseur extérieur selon la revendication 4, la douille cylindrique (12b) de l'embase (1b) du rétroviseur s'adaptant et s'encliquetant entre deux coussinets de montage (22b, 24b) coïncidant axialement, situés sur des bras.

7. Rétroviseur extérieur selon l'une des revendications précédentes, l'axe de pivotement étant défini par l'axe médian d'une cheville d'articulation (3, 3a, 3b) traversant le bras.

8. Rétroviseur extérieur selon la revendication 5, **caractérisé par le fait que** la douille (12a), semi-ouverte dans la direction périphérique, ceinture au moins partiellement le bras.

9. Rétroviseur extérieur selon l'une ou plusieurs des revendications 4 à 8, **caractérisé par le fait que** la cheville d'articulation est encliquetée axialement dans le bras.

10. Rétroviseur extérieur selon l'une des revendications précédentes, **caractérisé par le fait qu'**un pignon (15b), dont la couronne dentée (11b) se trouve dans un plan parallèle à l'axe de pivotement (4a), est façonné sur la pièce de montage en vue de la rotation du support du rétroviseur autour d'un axe perpendiculaire à l'axe de pivotement.

11. Rétroviseur extérieur selon l'une des revendications précédentes, **caractérisé par le fait que** le support du rétroviseur présente une surface réflectrice (40c) pouvant, de préférence, être chauffée.

12. Rétroviseur extérieur selon l'une des revendications précédentes, **caractérisé par le fait qu'**un mentonnet (40) saillant radialement, façonné sur la pièce de montage ou sur le bras en tant que moyen de limitation de la course de pivotement, est mobile dans une rainure (16) prévue et délimitée (17, 18) sur ledit bras ou sur ladite pièce de montage.

13. Rétroviseur extérieur selon l'une des revendications 5 ou 8, **caractérisé par le fait que** les surfaces de montage (61, 63) sont façonnées sur les extrémités d'une pièce intercalaire (7) du support du rétroviseur qui s'étend à travers une douille de la pièce de montage (10a), semi-ouverte dans le sens périphérique.

14. Rétroviseur extérieur selon l'une des revendications précédentes, **caractérisé par le fait que** le bras ou les bras est (sont) réalisé(s) en tant que coussinet(s) dans lequel (lesquels) la cheville d'articulation (3, 3a, 3b) peut être encliquetée.

15. Rétroviseur extérieur selon l'une des revendications précédentes, **caractérisé par le fait que** des moyens d'encliquetage (51, 52, 53, 54, 52a, 52b) sont prévus sur le bras ou les bras, et sur la cheville d'articulation, moyens dont la venue en prise peut être déclenchée par impact sur le support du rétroviseur.

16. Rétroviseur extérieur selon la revendication 15, **caractérisé par le fait que** les moyens d'encliquetage sont prévus sur la pièce intercalaire (7).

17. Rétroviseur extérieur selon l'une des revendications 10 à 16, **caractérisé par le fait qu'**une couronne dentée (39, 34a, 36b), prévue sur le pourtour de la cheville d'articulation, engrène dans une crémaillère (47a) à entraînement motorisé ou dans une roue de transmission (47) à entraînement motorisé.

18. Rétroviseur extérieur selon l'une des revendications précédentes, **caractérisé par le fait que** la douille, le support du rétroviseur et la cheville d'articulation sont en matière plastique.
